**Europäisches Patentamt**

**European Patent Office**

**Office européen des brevets**

(19)

(11) Veröffentlichungsnummer: **0 052 190**
**A2**

(12) # EUROPÄISCHE PATENTANMELDUNG

(21) Anmeldenummer: **81106926.9**

(22) Anmeldetag: **04.09.81**

(51) Int. Cl.³: **C 08 F 299/04**
**C 09 D 3/00**

(30) Priorität: **13.11.80 AT 5570/80**

(43) Veröffentlichungstag der Anmeldung:
**26.05.82 Patentblatt 82/21**

(84) Benannte Vertragsstaaten:
**BE CH DE FR GB IT LI NL SE**

(71) Anmelder: **Vianova Kunstharz Aktiengesellschaft**

**A-8402 Werndorf(AT)**

(72) Erfinder: **Klintschar, Gerfried, Dr.**
**Rieshang 20**
**A-8010 Graz(CH)**

(72) Erfinder: **Tulacs, Laszlo, Dipl.-Ing.**
**Münzgrabengürtel 21**
**A-8010 Graz(AT)**

(72) Erfinder: **Nowak, Peter, Dr.**
**Im Vogelsang 7**
**A-8045 Graz(AT)**

(74) Vertreter: **Pitter, Robert, Dr. et al,**
**Leechgasse 21**
**A-8010 Graz(AT)**

(54) **Verwendung von Kaltplastik-Überzugsmassen zur Herstellung von Strassenmarkierungen.**

(57) Mischungen von ungesättigten Polyesterharzen mit Acrylesterpolymeren sowie gegebenenfalls untergeordneten Mengen anderer Vinyl- oder Vinylidenmonomerer werden als Bindemittel für sogenannte "Kaltplastiksysteme" zur Herstellung von Straßenmarkierungen eingesetzt. Die Systeme enthalten die üblichen Beschleuniger, Inhibitoren, Stabilisatoren und Weichmacher sowie Füllstoffe im Verhältnis von 1 Tl Bindemittel : 1 - 6 Tlen Füllstoff. Der Auftrag kann bei geeigneter Formulierung auch durch Spritzen erfolgen. Eine Beschleunigung der Härtung durch kurzzeitige Wärmeinwirkung ist möglich.

EP 0 052 190 A2

Croydon Printing Company Ltd.

- 1 -

*Kaltplastik auf Polyesterbasis für die Herstellung von Straßen-markierungen.*

Die Erfindung betrifft Materialien auf Basis von ungesättigten Polyesterharzen zur Herstellung von Straßenmarkierungen.

Für die Herstellung von Straßenmarkierungen kommen, wie aus der Literatur hervorgeht, verschiedene Systeme zur Anwendung. Wie aus den zusammenfassenden Übersichten von Machunsky in "Farbe und Lack", 77. Jahrgang, Nr. 10, 1977, Seite 1006 - 1007, bzw. in "Die Mappe", 1979, Heft 7, Seite 488 - 491 hervorgeht, werden dabei Dünnschicht- oder Dickschichtsysteme unterschieden. Andere Unterscheidungen erfolgen in bezug auf die Verarbeitungstemperatur (Kalt- oder Heißverarbeitung) oder die Anzahl der nötigen Komponenten (Ein- oder Zweikomponentenbeschichtungen).

Aufgrund des allgemeinen Trends zu lösungsmittelfreien oder lösungsmittelarmen Systemen ist anzunehmen, daß die 2-Komponentenkaltplastiksysteme in Zukunft wesentlich zunehmen werden, soferne es gelingt, die Qualitätsanforderungen, welche an diese Beschichtungen gestellt werden, mit preiswerteren Materialien als die derzeit eingesetzten Methylmethacrylatpolymeren oder Epoxidharze zu erfüllen.

Die Aufgabe der vorliegenden Erfindung war demgemäß die Auffindung eines Harzsystems, welches einerseits den qualitätsmäßigen Anforderungen, andererseits durch vereinfachten Auftrag und preislich günstigere Ausgangsmaterialien den wirtschaftlichen Gegebenheiten besser entspricht.

Die gestellte Aufgabe wurde gemäß der vorliegenden Anmeldung dadurch gelöst, daß für die Herstellung von Straßenmarkierungen Kaltplastik-Systeme herangezogen werden, welche dadurch gekennzeichnet sind, daß sie als Bindemittelbasis eine Mischung aus

(a) 20 - 70, vorzugsweise 30 - 55 Gew.-% eines ungesättigten Polyesterharzes oder Gemische solcher Polyesterharze,

- 2 -

(b) 30 - 80, vorzugsweise 45 - 70 Gew.-% eines Esters der Acryl- oder der Methacrylsäure mit einem Monoalkohol mit 1 - 12 Kohlenstoffatomen oder eines Gemisches solcher Ester, sowie gegebenenfalls

(c) 0 - 30 Gew.-% einer mit den Komponenten (a) und/oder (b) copolymerisierbaren monomeren Vinyl- oder Vinylidenverbindung aufweisen und

neben einem üblichen Initiator/Beschleunigersystem für ungesättigte Polyester, Stabilisatoren , Weichmacher und die für den Einsatzzweck üblichen anorganischen Füllstoffe in einem Verhältnis von 1 Teil Bindemittel zu 1 bis 6 Teilen Füllstoff, sowie gegebenenfalls andere übliche Zusatzstoffe enthalten.

Gegenüber den bekannten Kaltplastik-Systemen auf Basis von Lösungen hochmolekularen Acrylpolymeren in Acrylmonomeren zeigen die erfindungsgemäßen Systeme auch eine durch das niedrige Molekulargewicht der Polyesterharze wesentlich bessere Benetzungsfähigkeit für die Füllstoffe, was ebenfalls zur Erhöhung der Wirtschaftlichkeit der erfindungsgemäßen Systeme beiträgt.

Die erfindungsgemäßen Systeme benötigen üblicherweise keine zusätzlichen Vernetzer in Form von polyfunktionellen Acrylaten, wie sie in den Acrylatsystemen eingesetzt werden. Ein Einsatz dieser Materialien in untergeordneten Mengen, d. h. bis zu etwa 15 % des gesamten Monomerenanteils ist selbstverständlich möglich.

Gegenüber den ebenfalls vorgeschlagenen Systemen auf Epoxidharzbasis zeigen die erfindungsgemäßen Materalien neben besserer Benetzungsfähigkeit eine überlegene Kreidungsfestigkeit.

Die erfindungsgemäßen Kaltplastiken zeichnen sich überdies durch eine niedrige Viskosität, gutes Benetzungsvermögen für Füllstoffe und Untergrund, gute Vernetzungsdichte und gutes Haftvermögen, sowie dadurch bedingt, durch gute Beständigkeit gegenüber Witterung und mechanische Einflüsse.

Als Polyesterkomponente ist im Prinzip eine breite Palette der bekannten ungesättigten Polyesterharze einsetzbar. Abhängig von der Art der eingesetzten Monomeren oder von gegebenenfalls eingesetzten nichtreaktiven Weichmachern, muß eine dem Fachmann geläufige Auswahl in bezug auf den Einsatz von härteren oder weicheren Harzen oder von geeigneten Mischungen getroffen werden. Für die Charakteristik sowie die Herstellung der ungesättigten Polyesterharze existiert ein breites Literaturangebot, sodaß ein näheres Eingehen nicht notwendig erscheint.

Die zweite wesentliche Bindemittelkomponente stellen die Monomeren dar, in denen die ungesättigten Polyesterharze gelöst werden. Für die erfindungsgemäßen Beschichtungsmassen werden vorzugsweise die Ester der Acryl- und/oder der Methacrylsäure mit Monoalkoholen, welche 1 bis 12 Kohlenstoffatome aufweisen eingesetzt. Die Art der eingesetzten (Meth)acrylsäureester muß mit dem eingesetzten Polyestersystem, sowie den gegebenenfalls eingesetzten Weichmachern und auch auf den jeweiligen Einsatzzweck abgestimmt werden. In untergeordneten Mengen können auch andere Vinyl- oder Vinylidenmonomere mitverwendet werden, wobei vor allem Styrol oder Vinyltoluol bevorzugt werden. (Meth)acrylsäurehydroxyester oder Acrylamid stellen weitere in geringen Mengen einsetzbare Monomeren dar.

Die Mengenverhältnisse der Bindemittelkomponenten können dabei innerhalb der im Anspruch angegebenen Grenzen variiert werden.

Die Verarbeitung der Bindemittel erfolgt üblicherweise in Form einer relativ hoch gefüllten Masse. Als Füllstoffe dienen dabei Calcit, Cristobalit, Quarz, Glimmer, Diatomeenerde, Glasperlen u. a. Das Verhältnis von Bindemittellösung und Füllstoff bewegt sich zwischen 1 : 1 und 1 : 6. Als weitere Bestandteile können die erfindungsgemäßen Systeme gegebenenfalls Weichmacher wie Chlorparaffin, Dibutylphthalat, Diphenoxyäthylformal oder andere spezifische Additive, wie Stabilisatoren oder Paraffin, enthalten.

Die zur Härtung der Beschichtungen verwendeten Initiator-Beschleunigersysteme sind aus der Polyestertechnologie bekannt. Für den

- 4 -

erfindungsgemäßen Zweck werden vorzugsweise Kombinationen aus N,N-Dimethylanilin, N,N-Dimethyl-p-Toluidin und Cobaltoctoat als Beschleuniger und Dibenzoylperoxid oder Cyclohexanonperoxid als Härter verwendet. Im allgemeinen wird die Reaktivität des Systems so eingestellt,daß eine Topfzeit von 10 bis 30 Minuten erreicht wird.

Der Auftrag der Kaltplastik kann nach den in der Literatur für solche 2 K - Systeme beschriebenen Methoden erfolgen. Bei entsprechender Formulierung sind die erfindungsgemäßen Systeme auch im Spritzauftrag applizierbar.

Neben der Härtung bei Umgebungstemperatur gestatten die erfindungsgemäßen Systeme auch Schockhärtungen durch Wärmeeinwirkung z. B. 10 Sekunden/130°C.

Die folgenden Beispiele erläutern die Erfindung. Alle Mengenangaben und Prozentangaben beziehen sich, soweit nichts anderes angeführt ist, auf Gewichtseinheiten.

Beispiel 1:

| Teil I: | 543 | Tle Ungesättigtes Polyesterharz auf Basis von Propylenglykol, Phthalsäureanhydrid und Maleinsäureanhydrid |
|---|---|---|
| Teil II: | 814 | Tle Methacrylsäuremethylester |
| | 287 | Tle Acrylsäurebutylester |
| | 164 | Tle Hexandioldiacrylat |
| Teil III: | 181 | Tle Dibutylphthalat |
| | 11 | Tle N,N-Dimethyl-p-toluidin |
| | 36 | Tle Cobaltoctoat 1%ig |
| | 9 | Tle Paraffin (Fp. ca. 53°C) |
| | 1810 | Tle Titandioxid, Rutil |
| | 543 | Tle Diatomeenerde |
| | 905 | Tle Quarzmehl (60 µ) |
| | 2707 | Tle Calcit (15 µ) |
| | 1991 | Tle Calcit (500 µ) |
| | 10000 | |

– 5 –

Die Teile I und II werden, wie in der Polyesterproduktion üblich, in der Wärme vermischt und ergeben die Kunstharzkomponente der Kaltplastikmasse. In einem Dissolver wird der Teil III während ca. 20 Minuten in diese Mischung eingearbeitet. 1000 Tle der Masse werden mit 7 Tlen Dibenzoylperoxid 50 % vermischt. Die entstehende Mischung härtet, 2 mm dick auf eine Asbestzementplatte aufgetragen, in 20 Minuten zu einer fest haftenden, harten Masse aus. Im Kugelstrahlversuch nach DIN 53 154 übersteht die Beschichtung 30 000 Kugeln, ohne abzuplatzen.

Beispiel 2 :

| Teil I: | 1320 | Tle Ungesättigtes Polyesterharz auf Basis von Diäthylenglykol, Tetrahydrophthalsäureanhydrid und Maleinsäureanhydrid |
|---|---|---|
| Teil II: | 480 | Tle Styrol |
| | 1500 | Tle Methacrylsäuremethylester |
| Teil III: | 13 | Tle Dimethyl-p-toluidin |
| | 16 | Tle Paraffin (Fp. ca. 53°C) |
| | 2475 | Tle Titandioxid (Rutil) |
| | 1358 | Tle Mikronisierter Glimmer |
| | 2838 | Tle Calcit (5 µ) |
| | 10000 | Tle Komponente I |

| | 278 | Tle Diphenoxyäthylformal |
|---|---|---|
| | 39 | Tle Dibenzoylperoxid (50 %) |
| | 13 | Tle Cumolhydroperoxid |
| | 670 | Tle Glasperlen (80 µ) |
| | 1000 | Tle Komponente II |

Die Komponente I wird, wie in Beispiel 1 erläutert, hergestellt. Die Komponente II wird durch intensives Rühren gemischt. Eine Mischung aus 4 Tlen der Komponente I und 1 Tl der Komponente II ergibt eine durch Spritzauftrag applizierbare Kaltplastikfarbe, die, in einer Schichtstärke von 600 µ auf eine Asbestzementplatte aufgezogen, nach 25 Minuten härtet und im Kugelstrahlversuch nach DIN 53 154 30 000 Kugeln übersteht, ohne abzuplatzen.

- 6 -

*Beispiel 3 :*

| | | | |
|---|---|---|---|
| *Teil I:* | *1200* | *Tle* | *Ungesättigtes Polyesterharz auf Basis von TCD-Alkohol M, Phthalsäureanhydrid und Maleinsäureanhydrid* |
| *Teil II:* | *1020* | *Tle* | *Methacrylsäuremethylester* |
| | *280* | *Tle* | *Hydroxyäthylacrylat* |
| *Teil III:* | *12* | *Tle* | *Dimethyl-p-toluidin* |
| | *12* | *Tle* | *Paraffin (Fp. ca. 53°C)* |
| | *625* | *Tle* | *Mikronisierter Glimmer* |
| | *1850* | *Tle* | *Titandioxid (Rutil)* |
| | *2500* | *Tle* | *Calcit (15 μ)* |
| | *2500* | *Tle* | *Calcit ( 500 μ)* |
| | *10000* | *Tle* | |

*Die Kaltplastikmasse wird wie im Beispiel 1 erläutert, hergestellt. 100 Tle davon werden mit 2 Tlen Dibenzoylperoxid (50%ig) vermischt und in einer Schicht von ca. 2 mm auf eine Asbestzementplatte aufgetragen. Die Masse erhärtet nach 30 Minuten zu einer harten, fest haftenden Schicht und erträgt im Kugelstrahlversuch nach DIN 53 154 30 000 Kugeln, ohne sich vom Untergrund zu lösen.*

Patentansprüche:

1. Kaltplastiksystem insbesonders zur Herstellung von Straßenmarkierungen, <u>dadurch gekennzeichnet,</u> daß sie als Bindemittelbasis eine Mischung aus

    (a) 20 - 70, vorzugsweise 30 - 55 Gew.-% eines ungesättigten Polyesterharzes oder Gemische solcher Polyesterharze,

    (b) 30 - 80, vorzugsweise 45 - 70 Gew.-% eines Esters der Acryl- oder der Methacrylsäure mit einem Monoalkohol mit 1 - 12 Kohlenstoffatomen oder eines Gemisches solcher Ester, sowie gegebenenfalls

    (c) 0 - 30 Gew.-% einer mit den Komponenten (a) und/oder (b) copolymerisierbaren monomeren Vinyl- oder Vinylidenverbindung aufweisen und

    neben einem üblichen Initiator/Beschleunigersystem für ungesättigte Polyester, Stabilisatoren, Weichmacher und die für den Einsatzzweck üblichen anorganischen Füllstoffe in einem Verhältnis von 1 Teil Bindemittel zu 1 bis 6 Teilen Füllstoff sowie gegebenenfalls andere übliche Zusatzstoffe enthalten.

2. Kaltplastiksystem nach Anspruch 1, dadurch gekennzeichnet, daß es für den Spritzauftrag formuliert werden kann.

3. Kaltplastiksystem nach den Ansprüchen 1 und 2, dadurch gekennzeichnet, daß es durch kurzzeitige Wärmeeinwirkung gehärtet werden Kann.